# FASCICULE DE BREVET EUROPEEN

(11) **EP 1 507 231 B1**
(45) Date de publication et mention de la délivrance du brevet: **25.10.2006**
(21) Numéro de dépôt: 04292003.3
(22) Date de dépôt: 06.08.2004
(51) Int. Cl.: G06K 17/00, G06K 7/00, G06K 13/07

(54) **Elément d'adaptation pour supports électroniques programmables et utilisation dans une machine de personnalisation universelle**
Adapter für programmierbare elektronische Datenträger und dessen Verwendung in einem universellen Personalisierungsgerät
Adapter for programmable electronic data carriers and use thereof in a universal personalisation device

(30) Priorité: 14.08.2003 FR 0309972
(43) Date de publication de la demande: 16.02.2005
(73) Titulaire: DATACARD CORPORATION, Minnetonka, MN 55343-9015 (US)
(72) Inventeur: Auchere, Sylvain, 45430 Brou (FR); Beulet, Frédéric, 45130 Meung sur Loire (FR); Mongin, Hervé, 45470 Trainou (FR); Berthe, Benoit, 45380 La Chapelle St. Mesmin (FR)
(74) Mandataire: Debay, Yves

(56) Documents cités:
- EP-A- 0 647 918
- EP-A- 0 797 167
- EP-A- 0 984 389
- EP-A- 1 076 314
- WO-A-02/069285
- DE-A- 19 641 892

## Description

La présente invention concerne un élément d'adaptation pour supports électroniques programmables de types et de formes variées, tels que, par exemple, les cartes à puce format ISO ou plug, les clés USB, les PCMCIA, les Compact flash, les Smart Média, les Multimedia Card, les Memory stick, les SD card, les XD card, les cartes électroniques, etc..., contenant chacun de la mémoire programmable et un séquenceur logique ou un microprocesseur, et l'utilisation de l'élément d'adaptation dans une machine de personnalisation universelle de supports électroniques programmables.

Les équipements de personnalisation connus dans l'art antérieur (voir EPO 984 389, EP 1076 314 et EP 0797167) sont adaptés à la personnalisation d'une seule forme ou d'un seul type de support électronique programmable, ce qui entraîne un investissement important pour les fabricants de cartes de différents types, qui doivent changer leurs équipements chaque fois que la forme ou le type du support est modifié. Le document WO 02/069285 décrit un adapteur pour des lecteurs de cartes à puce permettant la lecture des cartes sans contacts. Le document EP 0 647 918 décrit un adapteur entre une interface PCMCIA et une carte à puce selon le standard ISO. Ces adapteurs ne sont pas utilisables pour être entraînés dans une machine de personnalisation.

La présente invention a pour but de pallier certains inconvénients de l'art antérieur en proposant un moyen d'utiliser un dispositif unique pour personnaliser tous types de supports électroniques programmables, ce qui permet de réduire les coûts d'investissement et donc le prix de vente des supports électroniques programmables.

Ce but est atteint par un élément d'adaptation selon la revendication 1.

Selon une autre particularité, les seconds moyens de communication sont au moins un connecteur de support, pouvant maintenir au moins un support électronique programmable, et des liaisons électriques ou optiques, assurant la liaison à contact entre le connecteur de support et les premiers moyens de communication de l'élément d'adaptation.

Selon une autre particularité, les seconds moyens de communication sont une antenne, qui permet à l'élément d'adaptation de communiquer par liaison sans contact avec le support électronique programmable, l'antenne étant reliée aux premiers moyens de communication de l'élément d'adaptation et disposée en vis-à-vis d'au moins une portion du support électronique programmable comprenant une antenne.

Selon une autre particularité, les moyens reliant l'antenne de l'élément d'adaptation aux premiers moyens de communication comprennent une carte électronique comportant des composants permettant de gérer la communication entre l'élément d'adaptation et le support électronique programmable.

Selon une autre particularité, les premiers moyens de communication sont une antenne, qui permet à l'élément d'adaptation de communiquer par liaison sans contact avec le dispositif de personnalisation de la machine de personnalisation.

Selon une autre particularité, une pluralité d'éléments d'adaptation identiques selon l'invention est utilisée dans une machine de personnalisation universelle de supports électroniques programmables, la machine de personnalisation comprenant au moins :
- un système de dépilage des éléments d'adaptation depuis un magasin d'entrée et un système d'empilage des éléments d'adaptation dans un magasin de sortie, le magasin d'entrée et le magasin de sortie étant distincts ou non,
- un système d'insertion des supports électroniques programmables dans les éléments d'adaptation en début de la machine de personnalisation, et un système de désinsertion des supports électroniques programmables des éléments d'adaptation en fin de la machine de personnalisation,
- un système d'entraînement des éléments d'adaptation, équipés de supports électroniques programmables, pour les faire transiter dans la machine de personnalisation,
- et un dispositif de personnalisation, comprenant un système de communication entre une base de données fournissant les informations de personnalisation et les supports électroniques programmables par l'intermédiaire des éléments d'adaptation, pour permettre de réaliser la personnalisation des supports électroniques programmables par programmation des informations de personnalisation.

Selon une autre particularité, le système d'entraînement est un ruban ou une bande.

Selon une autre particularité, le système d'entraînement est un plateau tournant.

Selon une autre particularité, les systèmes d'insertion et/ou de désinsertion des supports électroniques programmables et/ou les systèmes de dépilage et/ou d'empilage des éléments d'adaptation sont manuels.

Selon une autre particularité, le dispositif de personnalisation de la machine de personnalisation est un barillet, une roue ou un ascenseur linéaire comportant une pluralité de connecteurs se connectant chacun avec la plage de contact d'un élément d'adaptation.

D'autres particularités et avantages de la présente invention apparaîtront plus clairement à la lecture de la description ci-après, faite en référence aux dessins annexés, dans lesquels :
- les figures 1a, 2a et 3a (*et la nouvelle figure 4a)* représentent une vue en coupe longitudinale de l'élément d'adaptation respectivement selon trois modes de réalisation de l'invention, un support électronique programmable étant en place dans l'élément d'adaptation,
- la figure 1b représente une vue en perspective de l'élément d'adaptation selon le mode de réalisation de la figure 1a,
- les figures 2b à 2e représentent une vue en perspective respectivement des différentes pièces de l'élément d'adaptation selon le mode de réalisation de la figure 2a,
- les figures 3b à 3f représentent une vue en perspective respectivement des différentes pièces de l'élément d'adaptation selon le mode de réalisation de la figure 3a,
- la figure 4 représente une vue en perspective d'une machine de personnalisation selon un premier mode de réalisation de l'invention,
- la figure 5 représente une vue de détail en perspective de la figure 4,
- la figure 6 représente une vue en perspective d'une machine de personnalisation selon un deuxième mode de réalisation de l'invention,
- la figure 7 représente une vue de dessus d'une machine de personnalisation selon un troisième mode de réalisation de l'invention.

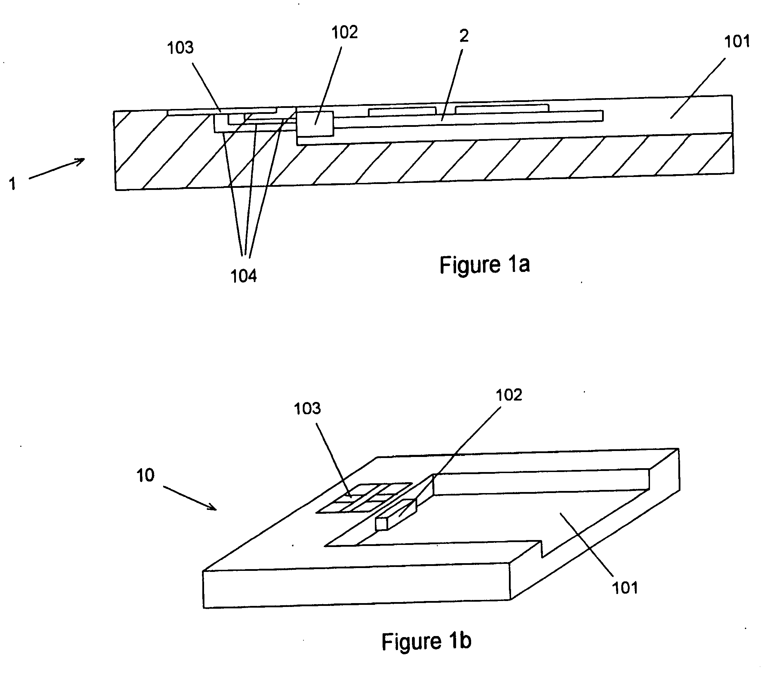

Dans un premier mode de réalisation, représenté en particulier sur les figures 1 a et 1 b, l'élément d'adaptation (1) selon l'invention est constitué d'un seul élément (10) muni d'un logement (101) de forme et de dimensions adaptées pour accueillir un type de support électronique programmable (2). Au moins un connecteur de support (102) permet de maintenir au moins un support électronique programmable (2) dans logement (101). Ce connecteur de support (102) est connecté à une plage de contact (103) par des liaisons électriques ou optiques (104). Dans ce mode de réalisation, les informations de personnalisation arrivent d'un dispositif de personnalisation (33) d'une machine de personnalisation (3) à la plage de contact (103) de l'élément d'adaptation (1) par liaison électrique ou optique et sont transmises au support électronique programmable (2) par liaison électrique ou optique via le connecteur de support (102).

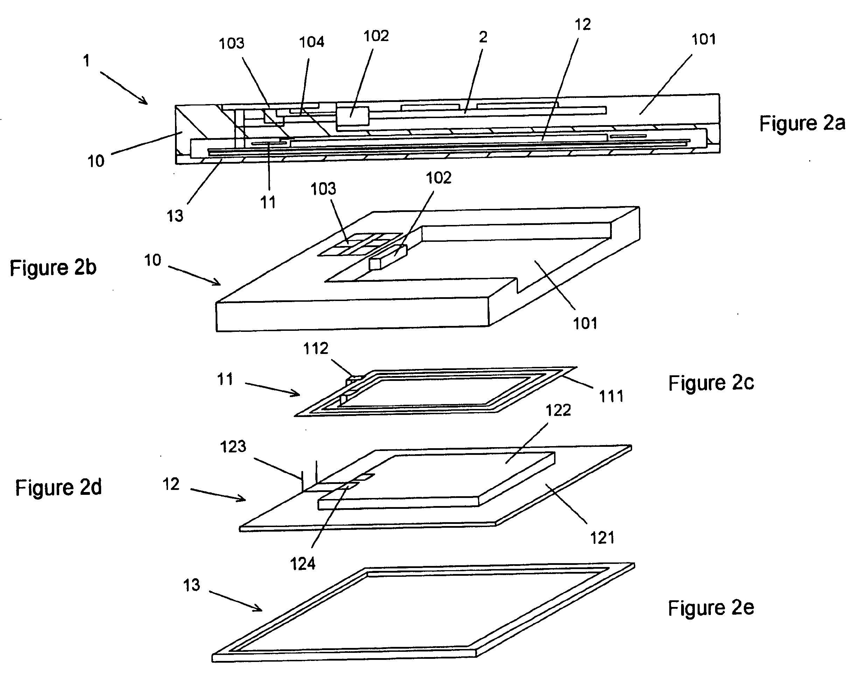

Dans un deuxième mode de réalisation, représenté en particulier sur les figures 2a à 2e, l'élément d'adaptation (1) selon l'invention est constitué de quatre éléments (10, 11, 12, 13). Un premier élément (10) est muni d'un logement (101) de forme et de dimensions adaptées pour accueillir un type de support électronique programmable (2). Au moins un connecteur de support (102) permet de maintenir au moins un support électronique programmable (2) dans le logement (101). Ce connecteur de support (102) est connecté à une plage de contact (103) par des liaisons électriques ou optiques (104). Un deuxième (11) et un troisième (12) éléments sont disposés entre le premier élément (10) et un fond (13). Le troisième élément (12) est une carte électronique (121) comportant des composants (122) de traitement des signaux et des communications entre le support électronique programmable et un dispositif de personnalisation (33) d'une machine de personnalisation (3). Les composants (122) sont reliés par des liaisons électriques ou optiques (123) à la plage de contact (103) du premier élément (10). Le deuxième élément (11) est une antenne (111) permettant à l'élément d'adaptation (1) d'alimenter en énergie et de communiquer par liaison sans contact avec le support électronique programmable situé dans le premier élément (10). L'antenne (111) est connectée aux composants (122) du troisième élément (12) par l'intermédiaire de pattes (112) venant en contact avec des plots (124) de contact du troisième élément (12). Cette antenne (111) est disposée en vis-à-vis d'au moins une portion du support électronique programmable comportant une antenne. La carte électronique (12) permet de gérer la communication entre l'élément d'adaptation (1) et le support électronique programmable (2). Dans ce mode de réalisation, les informations de personnalisation arrivent du dispositif de personnalisation (33) de la machine de personnalisation (3) à la plage de contact (103) de l'élément d'adaptation (1) par liaison à contact et sont transmises au support électronique programmable (2), soit par liaison à contact via le connecteur de support (102), soit par liaison sans contact par l'intermédiaire de l'antenne (111).

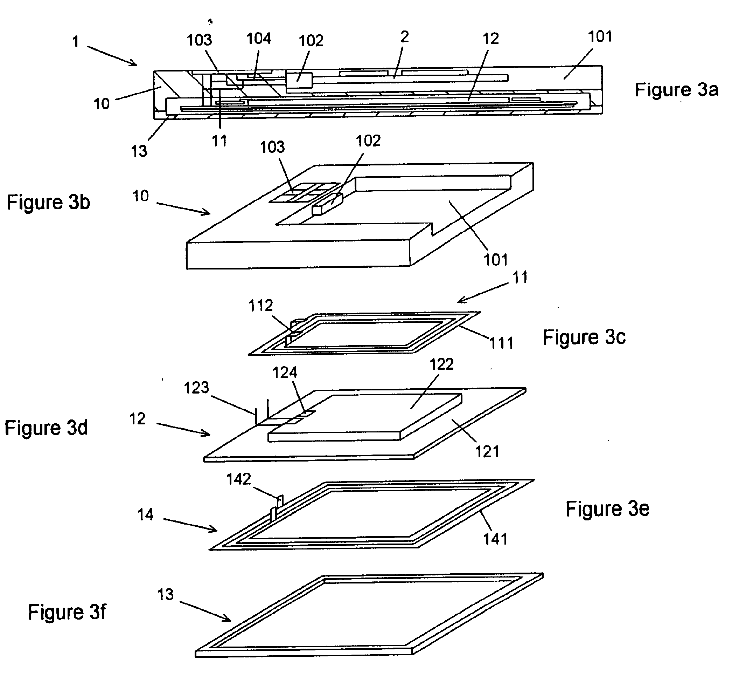

Dans un troisième mode de réalisation, représenté en particulier sur les figures 3a à 3f, l'élément d'adaptation (1) selon l'invention est constitué de cinq éléments (10, 11, 12, 13, 14). Les quatre premiers éléments (10, 11, 12, 13) sont similaires à ceux décrits dans le deuxième mode de réalisation. Le cinquième élément (14) est une antenne (141), disposée entre le troisième élément (12) et le fond (13), permettant à l'élément d'adaptation (1) de communiquer par liaison sans contact avec un dispositif de personnalisation (33) d'une machine de personnalisation (3). L'antenne (141) du cinquième élément (14) est connectée aux composants (122) du troisième élément (12) par l'intermédiaire de pattes (142). Dans ce mode de réalisation, Dans ce mode de réalisation, les informations de personnalisation arrivent du dispositif de personnalisation (33) de la machine de personnalisation (3) à la plage de contact (103) de l'élément d'adaptation (1), soit par liaison à contact via la plage de contact (103), soit par liaison sans contact via l'antenne (141, figure 3e) du cinquième élément (14), et sont transmises au support électronique programmable (2), soit par liaison à contact via le connecteur de support (102), soit par liaison sans contact via l'antenne (111, figure 3c) du deuxième élément (11). De cette façon, le support électronique programmable peut être personnalisé pendant toutes les opérations réalisées par la machine de personnalisation (3), sans attendre que l'élément d'adaptation soit en contact avec le dispositif de personnalisation (33) de la machine de personnalisation (3) par liaison à contact. Dans ce mode de réalisation, la machine de personnalisation (3) peut émettre plusieurs informations de personnalisation, s'adressant chacune à des supports électroniques programmables différents. La carte électronique (121) munie des composants (122) permet alors de trier les informations, par exemple grâce à des adresses, de déterminer celles qui sont destinées au(x) support(s) électronique(s) programmable(s) qu'elle porte, et de ne lui (leur) transmettre que les informations qui lui (leur) sont destinées. Pendant ces opérations de transmission par liaison sans contact, seules des informations non sensibles sont émises, en clair. Si des informations sensibles sont émises par les antennes, celles-ci seront préalablement cryptées. La carte électronique (121) munie des composants (122) incorporera un algorithme de décryptage pour les signaux provenant de la machine de personnalisation (3), et un algorithme de cryptage pour les signaux émis vers le support électronique programmable (2). Le principe de cryptage/décryptage utilisé entre la machine de personnalisation (3) et l'élément d'adaptation (1) peut être différent ou non du principe cryptage/décryptage utilisé entre l'élément d'adaptation (1) et le support électronique programmable (2).

Dans une variante de réalisation des deuxième (figures 2a à 2e) et troisième (figures 3a à 3f) modes de réalisation de l'invention, l'élément d'adaptation (1) ne comporte pas de carte électronique (12) et les antennes (111, 141) sont directement reliées à la plage de contact (103) du premier élément (10) pour recevoir directement de la machine de personnalisation (3) les informations de personnalisation à transmettre au support électronique programmable (2).

Dans l'ensemble de ces modes de réalisation, les dimensions de l'élément d'adaptation (1) sont supérieures au moins dans les dimensions largeur et profondeur à l'exception de l'épaisseur à celles de tous les supports électroniques programmables à personnaliser et correspondent aux dimensions acceptées par les machines de personnalisation (3). De plus, le connecteur de support (102) est adapté au type de support électronique programmable (2) qui doit être personnalisé. De cette façon, une unique machine de personnalisation (3) permet de personnaliser tous types de supports électroniques programmables par simple changement de l'élément d'adaptation (1), qui a des dimensions standard adaptées à la machine de personnalisation (3), en choisissant ce dernier en fonction de la forme et du type de support électronique programmable à personnaliser.

Ainsi, les supports électroniques programmables à personnaliser peuvent être différents dans leurs dimensions, dans leur connectique externe, utiliser un protocole de communication avec contact, sans contact ou mixte, répondre au protocole des cartes à puce ISO 7816 ou à tout autre protocole de communication qui leur sont propres.

Chaque élément d'adaptation (1) peut accueillir un seul ou plusieurs supports électroniques programmables (2), leur nombre étant limité par les dimensions de l'élément d'adaptation, qui sont fonction de la machine de personnalisation sur laquelle ils vont être utilisés, ainsi que de la connectique de l'élément d'adaptation (1).

L'élément d'adaptation selon l'invention peut être utilisé sur différents types de machines de personnalisation (3). Il permet de fournir à chaque machine de personnalisation une interface mécanique et électrique standard quel que soit le type de support électronique programmable qui doit être personnalisé. Chaque machine de personnalisation peut ainsi accueillir tous types de supports électroniques programmables sans subir aucune modification de sa structure.

Chaque machine de personnalisation (3) comporte au moins :
- un système de dépilage (300) des éléments d'adaptation (1) d'un magasin d'entrée (30) et un système d'empilage (310) des éléments d'adaptation (1) dans un magasin de sortie (31),
- un système d'insertion (34) des supports électroniques programmables (2) dans les éléments d'adaptation (1) en début de la machine de personnalisation (3), et un système de désinsertion (39) des supports électroniques programmables (2) des éléments d'adaptation (1) en fin de la machine de personnalisation (3),
- un système d'entraînement (32) des éléments d'adaptation (1) pour les amener successivement à chaque poste de la machine de personnalisation (3),
- et un dispositif de personnalisation (33), comprenant un système de communication entre une base de données fournissant les informations de personnalisation et les supports électroniques programmables (2) par l'intermédiaire des éléments d'adaptation (1), pour permettre de réaliser la personnalisation des supports électroniques programmables par programmation des informations de personnalisation dans la mémoire programmable des supports électroniques programmables.

Dans une variante de réalisation, l'insertion et la désinsertion des supports électroniques programmables dans les éléments d'adaptation peuvent être manuelle. De même pour le dépilage et l'empilage des éléments d'adaptation. Par exemple dans le cas particulier des machines unitaires permettant de produire à la main de petites quantités de supports électroniques programmables (2). Il n'y a alors pas de système de transport ni de système d'impression, mais simplement un dispositif de personnalisation à un poste.

Dans une autre variante de réalisation, les magasins d'entrée (30) et de sortie (31) peuvent être multiples et contenir tous les types d'éléments d'adaptation nécessaires à la personnalisation des supports électroniques programmables désirés, la machine de personnalisation étant alors équipée d'un module électronique de détermination du type d'éléments d'adaptation et de choix du type d'éléments d'adaptation désiré.

Dans une autre variante de réalisation, le magasin d'entrée (30) et le magasin de sortie (31) peuvent être confondus dans un unique magasin par exemple dans le cas des machines recyclant les éléments d'adaptations.

L'élément d'adaptation (1) selon l'invention est par exemple parallélépipédique, de façon à faciliter son dépilage et son empilage dans les magasins d'entrée (30) et de sortie (31), ainsi que son positionnement sur le système d'entraînement de la machine de personnalisation (3).

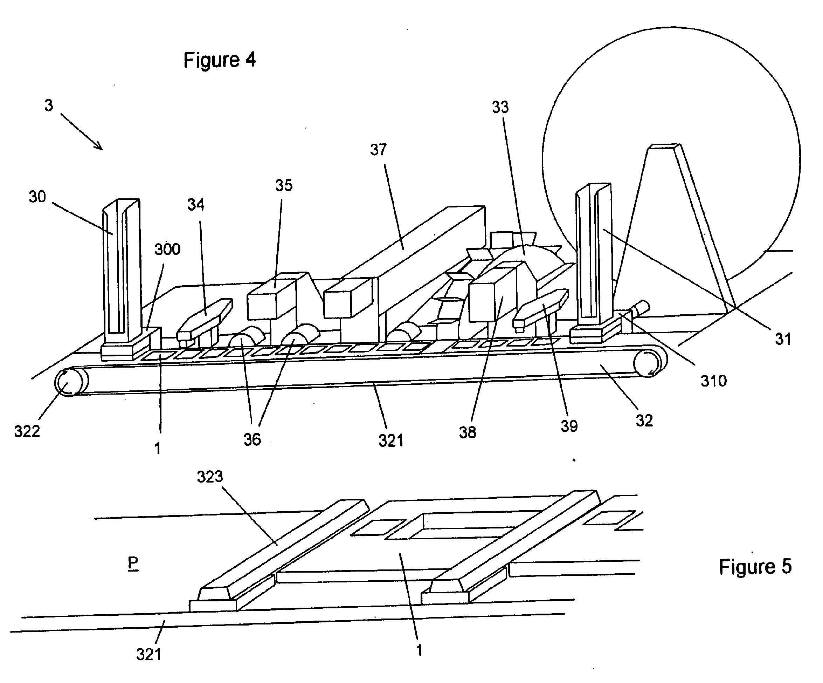

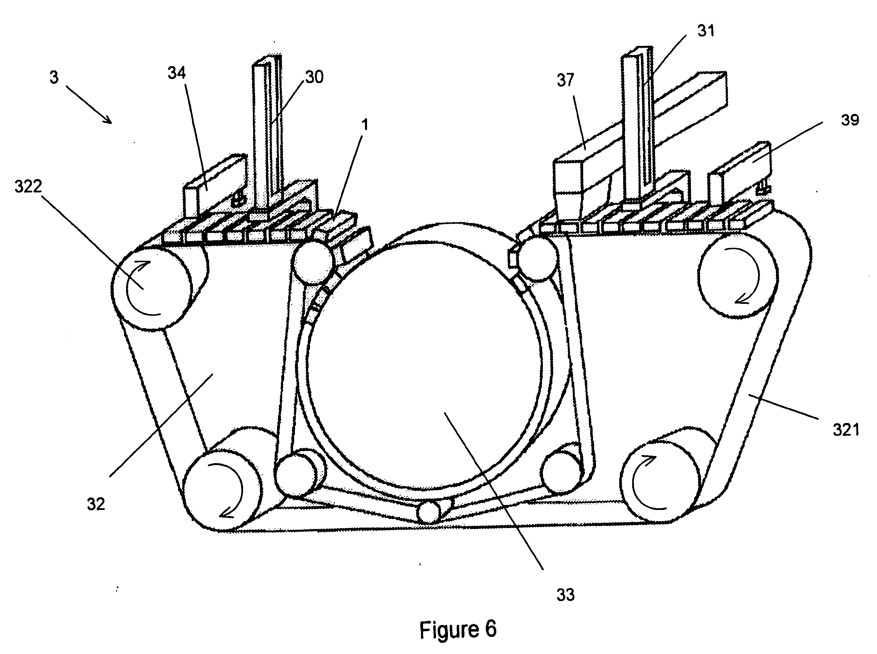

Dans un premier mode de réalisation, représenté en particulier sur la figure 4, le système d'entraînement (32) des éléments d'adaptation (1) est un ruban transporteur continu (321) sensiblement horizontal tendu entre deux poulies d'entraînement (322). Les éléments d'adaptation (1) sont dépilés sur le ruban (321) depuis le magasin d'entrée (30) et circulent sur un plan (P) le long de la machine de personnalisation (3) jusqu'au magasin d'empilage (31), les éléments d'adaptation (1) étant séparés les uns des autres par un élément séparateur (323), comme représenté sur la figure 5. Entre les deux magasins (30, 31), les éléments d'adaptation (1) passent successivement par:
- un poste (34) d'insertion des supports électroniques programmables (2) dans les éléments d'adaptation (1),
- un poste (35) d'inspection du positionnement des supports électroniques programmables (2) dans les éléments d'adaptation (1), ce poste d'inspection étant situé entre deux postes (36) de retournement des éléments d'adaptation (2),
- un poste (37) de gravure par laser et/ou d'impression par jet d'encre des supports électroniques programmables (2),
- le dispositif de personnalisation (33) tel que décrit dans les brevets français FR 2 746 531 et FR 2 766 945 de la société Gilles Leroux.
- un poste d'identification (38) des supports électroniques programmables (2), par exemple une caméra ou un lecteur de code à barres si les supports électroniques programmables sont munis d'un code à barres,
- et un poste (39) de désinsertion des supports électroniques programmables (2) des éléments d'adaptation (1).

Le système d'insertion (34) (respectivement de désinsertion (39)) des supports électroniques programmables (2) dans les (respectivement hors des) éléments d'adaptation (1) est par exemple constitué d'un bras muni d'un système de prise des supports électroniques programmables, qui tourne de 180° autour de son pied pour aller chercher (respectivement pour déposer) les supports électroniques programmables sur un distributeur (respectivement un espace de livraison) de supports électroniques programmables et reprend sa position pour les déposer (respectivement les prendre) dans les éléments d'adaptation.

Le dispositif de personnalisation (33) est composé, au moins dans le cas où l'élément d'adaptation communique par contact avec le système de personnalisation, d'au moins un barillet dont chaque compartiment peut accueillir et maintenir un élément d'adaptation (1). La plage de contact (103) de chaque élément d'adaptation (1) est connectée au compartiment du barillet qui l'accueille, de façon à ce que l'électronique du dispositif de personnalisation (33), embarquée ou non dans le barillet, transmette au(x) support(s) électronique(s) programmable(s) porté(s) par ledit élément d'adaptation (1) les informations de personnalisation nécessaires à la personnalisation dudit (desdits) support(s). Le dispositif de personnalisation (33) peut comporter plusieurs barillets, disposés les uns à la suite des autres, pour augmenter le temps de personnalisation disponible sur la machine de personnalisation (3). Dans ce cas, chaque barillet possède une station passerelle, appelée « passe travers », qui permet de faire passer les éléments d'adaptation d'un barillet à l'autre. Ainsi, lorsque le premier barillet est complètement chargé, il se positionne sur sa station passerelle. Les éléments d'adaptation qui passent par cette station remplissent alors le deuxième barillet, et ainsi de suite. Une fois le dernier barillet rempli, les éléments d'adaptation du premier barillet chargé sont déchargés en passant par les stations passerelles des barillets suivants, jusqu'à ce que le dernier barillet chargé soit complètement vidé.

Dans un deuxième mode de réalisation, représenté sur la figure 6, le système d'entraînement (32) des éléments d'adaptation (1) est une bande continue (321) tendue entre une pluralité de poulies d'entraînement (322). Dans ce mode de réalisation, les éléments d'adaptation (1) sont dépilés sur la bande (321) depuis le magasin d'entrée (30) et circulent sur l'intégralité de la bande (321), jusqu'à ce que l'utilisateur de la machine de personnalisation décide de changer le type d'éléments d'adaptation à utiliser, par exemple s'il souhaite personnaliser un autre type de supports électronique programmables. Ainsi, chaque élément d'adaptation peut réaliser une pluralité de tours du dispositif avant d'être empilé dans le magasin de sortie (31). Pour ce faire, les éléments d'adaptation (1) sont maintenus sur la bande (321) par des moyens de maintien (non représentés). Une fois que la bande est remplie d'éléments d'adaptation, des supports électroniques programmables sont insérés dans les éléments d'adaptation (1) à un poste (34) d'insertion des supports électroniques programmables (2) dans les éléments d'adaptation (1). Les éléments d'adaptation (1) passent ensuite par le dispositif de personnalisation (33), qui est constitué d'une roue munie d'une pluralité de connecteurs établissant chacun une liaison à contact avec un élément d'adaptation pour transmettre les informations de personnalisation générées par l'électronique embarquée ou non dans la roue. Puis les éléments d'adaptation (1) passent par un poste (37) de gravure par laser et/ou d'impression par jet d'encre des supports électroniques programmables (2) et par un poste (39) de désinsertion des supports électroniques programmables (2) des éléments d'adaptation (1), avant que les éléments d'adaptation ne descendent, maintenus sur la bande, pour continuer leur tour.

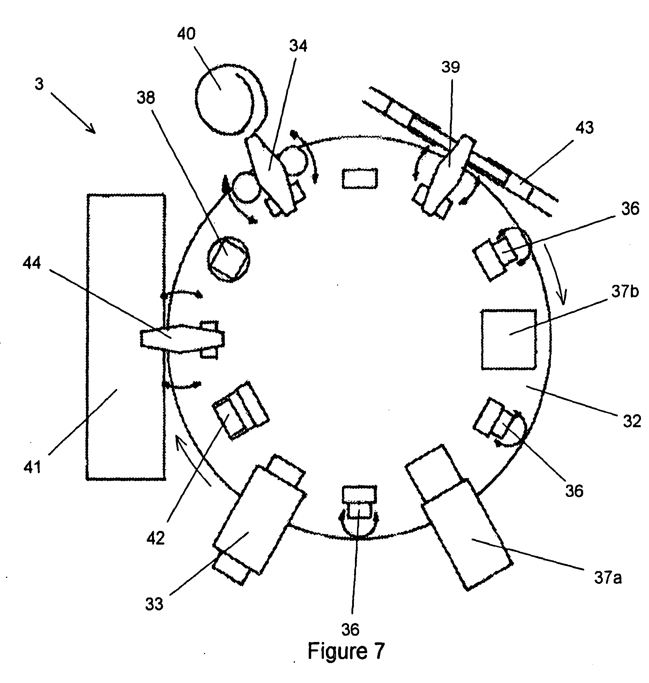

Dans le troisième mode de réalisation, représenté sur la figure 7, le système d'entraînement (32) des éléments d'adaptation (1) est un plateau tournant. Dans ce mode de réalisation, les éléments d'adaptation (1) sont fixés sur le plateau tournant, à proximité de son bord, jusqu'à ce l'utilisateur de la machine de personnalisation décide de changer le type d'éléments d'adaptation à utiliser. Ainsi, chaque élément d'adaptation subit une rotation autour de l'axe du plateau tournant et passe successivement par :
- un poste (34) d'insertion des supports électroniques programmables (2) dans les éléments d'adaptation (1), depuis un distributeur (40),
- un poste (37b) de gravure par laser ou d'impression par jet d'encre des supports électroniques programmables (2),
- un poste (37a) de gravure par laser ou d'impression par jet d'encre des supports électroniques programmables (2),
- le système de communication (33),
- un ascenseur haute pression adhésif (42),
- un poste (41) d'encartage des supports électroniques programmables (2), prélevés par un manipulateur (44) sur la machine de personnalisation (3),
- un poste d'identification (38) des supports électroniques programmables (2), par exemple une caméra ou un lecteur de code à barres si les supports électroniques programmables sont munis d'un code à barres,
- un poste (39) de désinsertion des supports électroniques programmables (2) des éléments d'adaptation (1) vers un tapis de stockage (43).
   Des postes (36) de retournement des éléments d'adaptation sont disposés, respectivement, entre le poste d'insertion 34 et le poste (37b) d'impression, entre les deux postes (37a, 37b) d'impression et entre le poste (37a) d'impression et le dispositif de personnalisation (33).

Dans une variante de réalisation du deuxième (figure 6) et troisième (figure 7) mode de réalisation, le magasin d'entrées (30) et le magasin de sorties (31) peuvent être confondus. Par exemple, au début de la production de personnalisation de support électronique programmable (2), ie magasin dépile un nombre suffisant d'éléments d'adaptation (1) permettent de remplir la machine de personnalisation (3). Lors de la production les éléments d'adaptation (1) circulent dans la machine sans passer par le magasin. En fin de production les éléments d'adaptations disposés sur la machine de personnalisation (3) sont ré-empilés dans le même magasin. Plusieurs magasins à doubles fonctions peuvent, ainsi contenir différents types d'éléments d'adaptations (1).

Dans une variante de réalisation des premier (figure 4) et troisième (figure 7) modes de réalisation, le dispositif de personnalisation (33) est un ascenseur linéaire similaire à celui décrit dans la demande de brevet EP 1 076 314.

Les éléments d'adaptation (1) étant munis d'une plage de contact (103) identique à celle des cartes à puce, il est possible d'adapter des machines de personnalisation existant en redimensionnant les différents éléments de la machine pour qu'ils puissent accueillir des éléments d'adaptation (1) à la place des cartes à puce.

Il doit être évident, pour les personnes versées dans l'art, que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Elément d'adaptation (1), pour au moins un support électronique programmable (2), de dimensions surfaciques supérieures à celles de tous les supports électroniques programmables, l'élément d'adaptation (1) étant **caractérisé en ce que** le support électronique programmable étant à personnaliser sur une machine de personnalisation, les dimensions de l'élément d'adaptation correspondent aux dimensions acceptées par la machine de personnalisation permettant un entraînement par la machine de personnalisation et **en ce que** l'élément d'adaptation est muni d'un logement (101) de forme et de dimensions adaptées pour accueillir et maintenir au moins un support électronique programmable (2), et **en ce qu'**il comporte des premiers moyens de communication (103 ; 141), lui permettant de recevoir des informations de personnalisation par liaison à contact ou sans contact d'un dispositif de personnalisation (33) d'une machine de personnalisation (3), et des seconds moyens de communication (102, 104, 111) lui permettant de transmettre lesdites informations de personnalisation au support électronique programmable par liaison à contact ou sans contact.

2. Elément d'adaptation (1) selon la revendication 1, **caractérisé en ce que** les seconds moyens de communication sont au moins un connecteur de support (102), pouvant maintenir au moins un support électronique programmable (2), et des liaisons électriques ou optiques (104), assurant la liaison entre le connecteur de support (1 02) et les premiers moyens de communication (103) de l'élément d'adaptation (1).

3. Elément d'adaptation (1) selon la revendication 1, **caractérisé en ce que** les seconds moyens de communication sont une antenne (111), qui permet à l'élément d'adaptation (1) de communiquer par liaison sans contact avec le support électronique programmable (2), l'antenne (111) étant reliée aux premiers moyens de communication (103 ; 141) de l'élément d'adaptation (1) et disposée en vis-à-vis d'au moins une portion du support électronique programmable comprenant une antenne.

4. Elément d'adaptation (1) selon la revendication 3, **caractérisé en ce que** les moyens (112, 121, 122, 124, 123) reliant l'antenne (111) de l'élément d'adaptation (1) aux premiers moyens de communication (103 ; 141) comprennent une carte électronique (121) comportant des composants (122) permettant de gérer la communication entre l'élément d'adaptation (1) et le support électronique programmable (2).

5. Elément d'adaptation (1) selon une des revendications 1, 3 ou 4, **caractérisé en ce que** les premiers moyens de communication sont une antenne (141), qui permet à l'élément d'adaptation (1) de communiquer par liaison sans contact avec le dispositif de personnalisation (33) de la machine de personnalisation (3).

6. Utilisation d'une pluralité d'éléments d'adaptation (1) identiques selon une des revendications 1 à 5 dans une machine de personnalisation (3) universelle de supports électroniques programmables (2), **caractérisé en ce que** la machine de personnalisation (3) comprend au moins:
- un système de dépilage (300) des éléments d'adaptation (1) depuis un magasin d'entrée (30) et un système d'empilage (310) des éléments d'adaptation (1) dans un magasin de sortie (31), le magasin d'entrée et le magasin de sortie étant distincts ou non,
- un système d'insertion (34) des supports électroniques programmables (2) dans les éléments d'adaptation (1) en début de la machine de personnalisation (3), et un système de désinsertion (35) des supports électroniques programmables (2) des éléments d'adaptation (1) en fin de la machine de personnalisation (3),
- un système d'entraînement (32) des éléments d'adaptation (1), équipés de supports électroniques programmables, pour les faire transiter dans la machine de personnalisation (3),
- et un dispositif de personnalisation (33), comprenant un système de communication entre une base de données fournissant les informations de personnalisation et les supports .électroniques programmables (2) par l'intermédiaire des éléments d'adaptation (1), pour permettre de réaliser la personnalisation des supports électroniques programmables par programmation des informations de personnalisation.

7. Utilisation d'une pluralité d'éléments d'adaptation (1) dans un dispositif de personnalisation (3) selon la revendication 6, **caractérisée en ce que** le système d'entraînement (32) est un ruban ou une bande.

8. Utilisation d'une pluralité d'éléments d'adaptation (1) dans un dispositif de personnalisation (3) selon la revendication 6, **caractérisée en ce que** le système d'entraînement (32) est un plateau tournant.

9. Utilisation d'une pluralité d'éléments d'adaptation dans un dispositif de personnalisation (3) selon une des revendications 6 à 8, **caractérisée en ce que** les systèmes d'insertion (34) et/ou de désinsertion (35) des supports électroniques programmables (2) et/ou les systèmes de dépilage et/ou d'empilage des éléments d'adaptation (1) sont manuels.

10. Utilisation d'une pluralité d'éléments d'adaptation dans un dispositif de personnalisation (3) selon une des revendications 6 à 9, **caractérisée en ce que** le dispositif de personnalisation (33) de la machine de personnalisation (3) est un barillet, une roue ou un ascenseur linéaire comportant une pluralité de connecteurs se connectant chacun avec la plage de contact (103) d'un élément d'adaptation (1).

## Claims

1. Adapter element (1), for at least one programmable electronic medium (2), with surface area dimensions greater than those of all the programmable electronic media, the adapter element (1) being **characterised in that**, since the programmable electronic medium is to be customised on a customisation machine, the dimensions of the adapter element correspond to the dimensions accepted by the customisation machine allowing driving by the customisation machine and **in that** the adapter element is provided with a housing (101) of form and size adapted to accommodate and maintain at least one programmable electronic medium (2), and **in that** it comprises first communication means (103; 141), allowing it to receive customisation information via a contact-type or contactless link of a customisation device (33) of a customisation machine (3), and second communication means (102, 104, 111) allowing it to transmit said customisation information to the programmable electronic medium by contact-type or contactless link.

2. Adapter element (1) according to Claim 1, **characterised in that** the second communication means are at least one connector medium (102), capable of holding at least one programmable electronic medium (2), and electrical or optical links (104), providing the link between the connector medium (102) and the first communication means (103) of the adapter element (1).

3. Adapter element (1) according to Claim 1, **characterised in that** the second communication means are an antenna (111) that allows the adapter element (1) to communicate via contactless link with the programmable electronic medium (2), the antenna (111) being connected to the first communication means (103; 141) of the adapter element (1) and arranged facing at least one portion of the programmable electronic medium comprising an antenna.

4. Adapter element (1) according to Claim 3, **characterised in that** the means (112, 121, 122, 124, 123) connecting the antenna (111) of the adapter element (1) to the first communication means (103; 141) comprise an electronic card (121) having components (122) making it possible to manage the communication between the adapter element (1) and the programmable electronic medium (2).

5. Adapter element (1) according to one of Claims 1, 3 or 4, **characterised in that** the first communication means are an antenna (141) that allows the adapter element (1) to communicate via contactless link with the customisation device (33) of the customisation machine (3).

6. Use of a plurality of identical adapter elements (1) according to one of Claims 1 to 5 in a universal customisation machine (3) for programmable electronic media (2), **characterised in that** the customisation machine (3) comprises at least:
- a system (300) for unstacking the adapter elements (1) from an input magazine (30) and a system for stacking (310) the adapter elements (1) in an output magazine (31), the input magazine and the output magazine being distinct or otherwise,
- a system (34) for inserting the programmable electronic media (2) into the adapter elements (1) at the beginning of the customisation machine (3), and a system (35) for removing the programmable electronic media (2) from the adapter elements (1) at the end of the customisation machine (3),
- a system (32) for driving the adapter elements (1), equipped with programmable electronic media, to make them pass through the customisation machine (3),
- and a customisation device (33), comprising a communication system between a data base providing customisation information and programmable electronic supports (2) via the adapter elements (1), to allow customisation of the programmable electronic media to be carried out by programming customisation information.

7. Use of a plurality of adapter elements (1) in a customisation device (3) according to Claim 6, **characterised in that** the drive system (32) is a ribbon or tape.

8. Use of a plurality of adapter elements (1) in a customisation device (3) according to Claim 6, **characterised in that** the drive system (32) is a turntable.

9. Use of a plurality of adapter elements in a customisation device (3) according to one of Claims 6 to 8, **characterised in that** the systems for inserting (34) and/or removing (35) the programmable electronic media (2) and/or the systems for unstacking and/or stacking the adapter elements (1) are manual.

10. Use of a plurality of adapter elements in a customisation device (3) according to one of Claims 6 to 9, **characterised in that** the customisation device (33) of the customisation machine (3) is a barrel, a wheel or a linear elevator comprising a plurality of connectors each connecting with the contact pad (103) of an adapter element (1).

## Patentansprüche

1. Anpassungselement (1) für mindestens einen programmierbaren elektronischen Träger (2), dessen Oberflächendimensionen größer sind als die aller programmierbaren elektronischen Träger, wobei das Anpassungselement (1) **dadurch gekennzeichnet ist, dass**, weil der programmierbare elektronische Träger (1) mit Personenkennzeichnung für ein Gerät mit Personenkennzeichnung vorgesehen ist, die Dimensionen des Anpassungselements den vom Gerät mit Personenkennzeichnung zugelassenen Dimensionen entsprechen, so dass ein Durchlauf durch das Gerät mit Personenkennzeichnung möglich ist, und **dadurch**, dass das Anpassungselement mit einer Einschubstelle (101) versehen ist, deren Form und Dimensionen dafür geeignet sind, mindestens einen programmierbaren elektronischen Träger (2) aufzunehmen und zu halten, und **dadurch**, dass es erste Kommunikationsmittel (103;141) beinhaltet, die es ihm ermöglichen, Informationen zur Personenkennzeichnung über eine Verbindung mit oder ohne Kontakt zu einer Vorrichtung zur Personenkennzeichnung (33) eines Geräts mit Personenkennzeichnung (3) zu empfangen, und sekundäre Kommunikationsmittel (102, 104, 111) besitzt, die es ihm ermöglichen, die sogenannten Informationen zur Personenkennzeichnung zum programmierbaren elektronischen Träger über eine Verbindung mit oder ohne Kontakt zu senden.

2. Anpassungselement (1) nach Anspruch 1, **dadurch gekennzeichnet, dass** die sekundären Kommunikationsmittel gebildet sind aus mindestens einem Trägeranschluss (102), der mindestens einen programmierbaren elektronischen Träger (2) aufnehmen kann, und elektrischen oder optischen Verbindungen (104), die die Verbindung zwischen dem Trägeranschluss (102) und den ersten Kommunikationsmitteln (103) des Anpassungselements (1) herstellen.

3. Anpassungselement (1) nach Anspruch 1, **dadurch gekennzeichnet, dass** die sekundären Kommunikationsmittel gebildet sind aus einer Antenne (111), die es dem Anpassungselement (1) ermöglicht, über eine Verbindung mit oder ohne Kontakt mit dem programmierbaren elektronischen Träger (2) zu kommunizieren, wobei die Antenne (111) mit den ersten Kommunikationsmitteln (103; 141) des Anpassungselements (1) verbunden ist und gegenüber von mindestens einem Abschnitt des programmierbaren elektronischen Trägers, der eine Antenne beinhaltet, angeordnet ist.

4. Anpassungselement (1) nach Anspruch 3, **dadurch gekennzeichnet, dass** die Mittel (112, 121, 122, 124, 123), die die Antenne (111) des Anpassungselements (1) mit den ersten Kommunikationsmitteln (103, 141) verbinden, eine elektronische Karte (121) beinhalten, die Komponenten (122) umfasst, welche eine Verwaltung der Kommunikation zwischen dem Anpassungselement (1) und dem programmierbaren elektronischen Träger (2) ermöglichen.

5. Anpassungselement (1) nach einem der Ansprüche 1, 3 oder 4, **dadurch gekennzeichnet, dass** die ersten Kommunikationsmittel aus einer Antenne (141) bestehen, die es dem Anpassungselement (1) ermöglichen, über eine kontaktlose Verbindung mit der Vorrichtung zur Personenkennzeichnung (33) des Geräts mit Personenkennzeichnung (3) zu kommunizieren.

6. Verwendung einer Vielzahl von identischen Anpassungselementen (1) nach einem der Ansprüche 1 bis 5 in einem Universalgerät zur Personenkennzeichnung (3) mit programmierbaren elektronischen Trägern (2), **dadurch gekennzeichnet, dass** das Gerät zur Personenkennzeichnung (3) mindestens Folgendes umfasst:
- ein Entnahmesystem (300) der Anpassungselemente (1) aus einem Eingangsmagazin (30) und ein Stapelsystem (310) der Anpassungselemente (1) in einem Ausgangsmagazin (31), wobei das Eingangsmagazin und das Ausgangsmagazin verschieden sein können oder nicht,
- ein Einschubsystem (34) der programmierbaren elektronischen Träger (2) in die Anpassungselemente (1) am Eingang in das Gerät zur Personenkennzeichnung (3) und ein Auswurfsystem (35) der programmierbaren elektronischen Träger (2) aus den Anpassungselementen (1) am Ausgang des Geräts zur Personenkennzeichnung (3),
- ein Fördersystem (32) für die Anpassungselemente (1), ausgerüstet mit programmierbaren elektronischen Trägern, um sie durch das Gerät zur Personenkennzeichnung (3) durchlaufen zu lassen,
- und eine Vorrichtung zur Personenkennzeichnung (33), umfassend ein Kommunikationssystem zwischen einer Datenbank, die die Informationen zur Personenkennzeichnung liefert, und den programmierbaren elektronischen Trägern (2) über die Anpassungselemente (1), um die Personalisierung der programmierbaren elektronischen Träger durch Programmieren der Informationen zur Personenkennzeichnung zu ermöglichen.

7. Verwendung einer Vielzahl von Anpassungselementen (1) in einer Vorrichtung zur Personenkennzeichnung (33) nach Anspruch 6, **dadurch gekennzeichnet, dass** das Fördersystem (32) ein Streifen oder ein Band ist.

8. Verwendung einer Vielzahl von Anpassungselementen (1) in einer Vorrichtung zur Personenkennzeichnung (33) nach Anspruch 6, **dadurch gekennzeichnet, dass** das Fördersystem (32) ein rotierender Teller ist.

9. Verwendung einer Vielzahl von Anpassungselementen (1) in einer Vorrichtung zur Personenkennzeichnung (33) nach einem der Ansprüche 6 bis 8, **dadurch gekennzeichnet, dass** die Einschubsysteme (34) und/oder die Auswurfsysteme (35) der programmierbaren elektronischen Träger (2) und/oder die Entnahmesysteme und/oder die Stapelsysteme der Anpassungselemente (1) manuell sind.

10. Verwendung einer Vielzahl von Anpassungselementen in einer Vorrichtung zur Personenkennzeichnung (33) nach einem der Ansprüche 6 bis 9, **dadurch gekennzeichnet, dass** die Vorrichtung zur Personenkennzeichnung (33) des Geräts mit Personenkennzeichnung (3) eine Trommel, ein Rad oder ein linearer Aufzug ist, versehen mit einer Vielzahl von Anschlüssen, die jeder an die Kontaktleiste (103) eines Anpassungselements (1) angeschlossen werden.
